# EUROPEAN PATENT APPLICATION

(11) **EP 1 083 724 A1**
(43) Date of publication of application: **14.03.2001**
(21) Application number: 99307190.1
(22) Date of filing: 10.09.1999
(51) Int. Cl.: H04L 29/12, H04L 12/28, H04Q 7/22, H04L 29/06

(54) **Method and apparatus for IP address discovery**

(71) Applicant: LUCENT TECHNOLOGIES INC., Murray Hill, New Jersey 07974-0636 (US)
(72) Inventor: Casati, Alessio, Wootton Bassett, Wiltshire, SN4 7SH (US); Yamini, Hatef, London NW11 8NL (GB); Yang, Jin, Eastleaze, Swindon Wiltshire SN5 7EP (US)
(74) Representative: Williams, David John

(57) **Abstract**

In a UMTS having a number of physical entities such as servers 18 and other entities supporting IP services 12,14,16, a terminal 20 wishing to set up an IP session with another terminal 36 having a server of unknown address sends a discovery packet 42 to a multicast proxy 30 which replicates the packet and sends each replication to the address of a different physical entity. The proxy either encapsulates the discovery packet 44 or readdresses it 46.

## Description

This invention relates to a method and apparatus for the discovery of Internet Protocol (IP) addresses, usually of a server but alternatively of other items of hardware. The invention may be used, for example, so that Voice over IP (VoIP) Services can be supplied in a packet radio system , such as the Universal Mobile Telephone System (UMTS), or the General Packet Radio Service (GPRS), or the Code Division Multiplex Access system CDMA-2000.

In a packet radio system it is known for a Mobile System (MS) to obtain its own IP address in several different ways, eg via Dynamic Host Configuration Protocol (DHCP), or via IP Point to Point Protocol (PPP) Configuration Protocol. In addition, in UMTS it is often a requirement to discover the IP addresses of other physical devices, usually servers but in some cases different types of service specific entities. For example, the IP address of a VoIP call controller such as an ITU-T H.323 GateKeeper or Session Initiation Protocol (SIP) server may be needed if the terminal requires the availability of VoIP services.

Some services have an automatic discovery procedure such as Directory Agent (DA) discovery in Service Location Protocol (SLP), H323 GK discovery method or SIP server discovery method. Such procedures rely on IP multicast or broadcast to send a discovery message and to listen for a reply from equipment with appropriate configuration information. However, not all networks support multicast routing; also broadcast and multicast may be controlled less strictly than a user feels is desirable, and therefore are avoided.

One option is to provide a static configuration to obtain the required IP address, and this is viable in small and seldom-rearranged networks, but dynamic configuration and address discovery is clearly more flexible and is essential for roaming equipment, such as cellular wireless terminals or laptops of a mobile workforce.

Another option is to use a DHCP server or the BOOT protocol, but for each new server a special DHCP parameter must be introduced and the DHCP software on the terminal must be upgraded, which is costly and inconvenient.

In general, configuration and discovery methods are application specific and a range of protocols exist for the purpose. No single protocol or system can address all configuration or discovery needs.

It is the object of the invention to provide a method and apparatus for IP address discovery which uses existing or future protocols without creating a new protocol or mechanism.

According to the invention, in a packet radio system comprising an Internet Protocol network supporting a plurality of physical entities providing IP services and having for each service automatic entity IP address discovery procedures, and a plurality of user terminals each connected through an access network to a service node and a router, a method of discovering the IP address of one physical entity characterised by the steps of:
generating a multicast or broadcast discovery message as a first discovery packet;
replicating the first discovery packet;
and addressing each replicated packet to a different physical entity.

The first discovery packet is a multicast or broadcast packet.

In one arrangement the proxy means replicates and encapsulates the first discovery packet so as to provide a number of second discovery packets each addressed to one IP service related entity and encapsulating the first discovery packet.

In another arrangement the proxy means replicates the first discovery packet and performs an address translation so as to provide a number of second discovery packets each addressed to one IP service related entity. In this arrangement the proxy means maps a known multicast address to a set of configured unicast addresses

Also according to the invention, a packet radio system comprising an Internet Protocol (IP) network supporting a plurality of physical entities providing IP services and having for each service automatic entity IP address discovery procedures, and a plurality of user terminals each connected through an access network to a service node and a router, characterised by a multicast proxy means connected to a service node and its router, the proxy means being arranged to receive a first discovery packet from the service node and to provide a number of second discovery packets each addressed to a different physical entity.

The invention will now be described by way of example with reference to the accompanying drawings in which:-
Figure 1 illustrates a packet radio system support service;
Figure 2 illustrates use of the invention to discover a H.323 Gatekeeper address; and
Figures 3(a), (b) and (c) illustrate a conventional discovery packet format and two formats of packet encapsulation and address translation according to the invention .

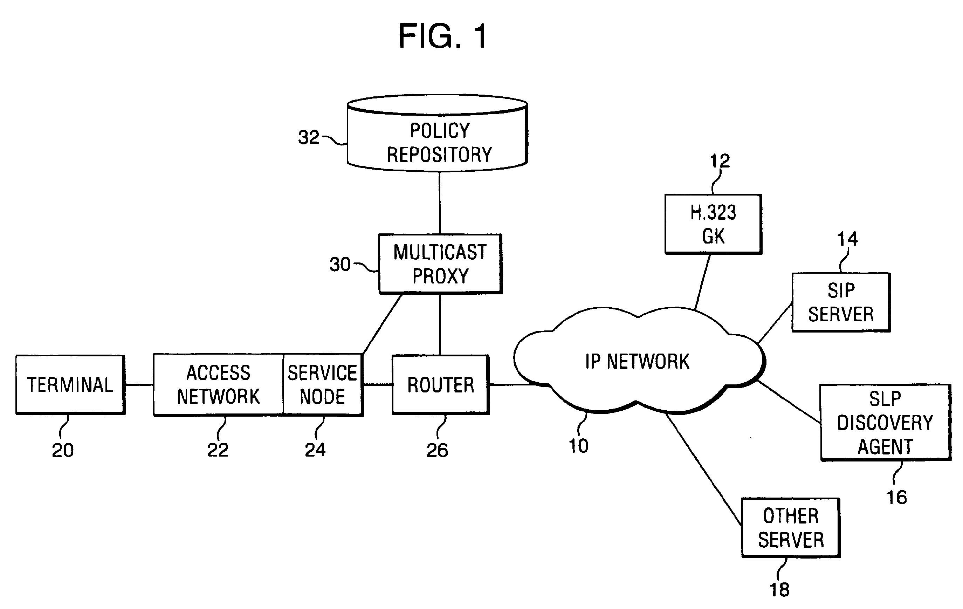

In Fig. 1 an IP network 10 supports a number of servers or agents each providing IP services and having automatic IP address discovery procedures, such as H.323 GK discovery method 12, SIP server discovery method 14, DA of Service Location Protocol SLP 16, and other servers 18. A terminal 20 is connected through an access network 22 to a service node 24, which is connected through a router 26 to the IP network 10. Such an arrangement is known.

The service node 24 is the node at which interworking of the IP layer with the IP non-access network occurs. The node 24 may be a Gateway GPRS Support Node (GGSN) in the General Packet Radio Service (GPRS) UMTS; or a Mobile IP Home Agent Code Division Multiple Access 2000; or a cable head-end in a cable access network; or a Digital Subscriber Line Multiple Access (DSLAM) in a Digital Subscriber Line (X-DSL) access network.

A multicast proxy means 30 is connected to the service node 24 and the router 26; the connections are logical, and Fig.1 illustrates one arrangement of physical connections. The proxy means 30 is connected to an optional policy repository 32.

At initial set-up, if the service node 24 supports multicast, the multicast proxy means 30 uses Internet Group Management Protocol (IGMP) to join itself to all the well known groups for IP multicast used by service discovery protocols so that the proxy can receive these multicast packets. From the IGMP membership report messages from each group the proxy determines the number of times the first packet must be replicated for the network configuration.

Alternatively, on set-up, the service node 24 is configured so that all packets with well known multicast destination addresses or broadcast destination addresses are sent to the proxy 30.

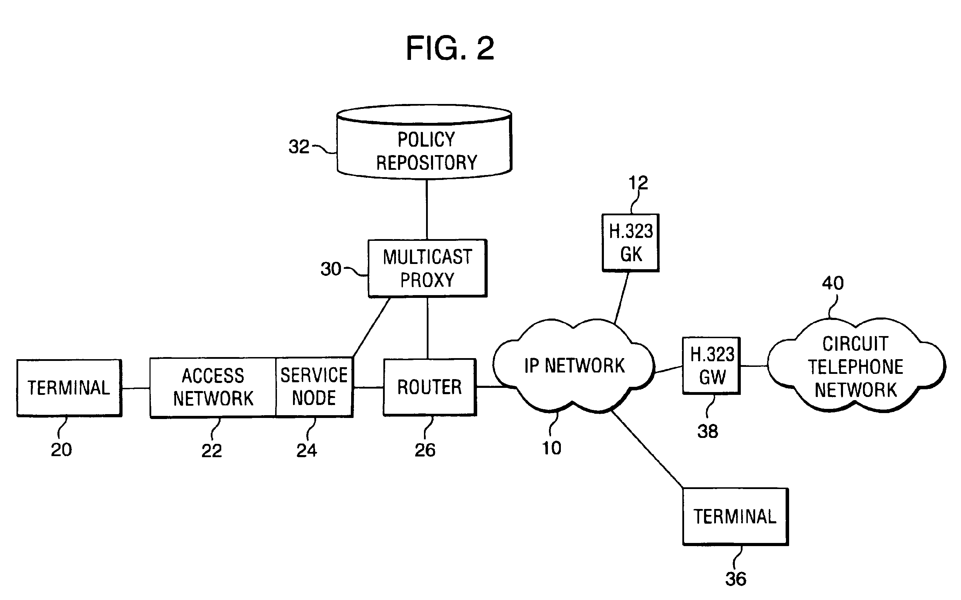

In Figure 2, in addition to many of the integers of Fig.1 there is a second terminal 36 and an H.323 gatekeeper 38 through which a circuit telephone network 40 is connected to the IP network 10. Of the IP service related entities shown in Fig.1, only gatekeeper 12 is shown in Fig.2.

Suppose that terminal 20 wishes to set up a VoIP service session with terminal 36 or with the network 40. To do so the terminal 20 must discover the IP sourcing address of the H.323 gatekeeper 38.

H.323 defines a Gatekeeper discovery algorithm which requires terminal 20 to send a GatekeeperRequest message to the multicast address 224.0.1.41 to discover the IP address of the gatekeeper 38. The terminal 20 puts the multicast address as the destination address on a first IP discovery packet and sends it into the network; the service node 24 forwards the packet to the proxy means 30.

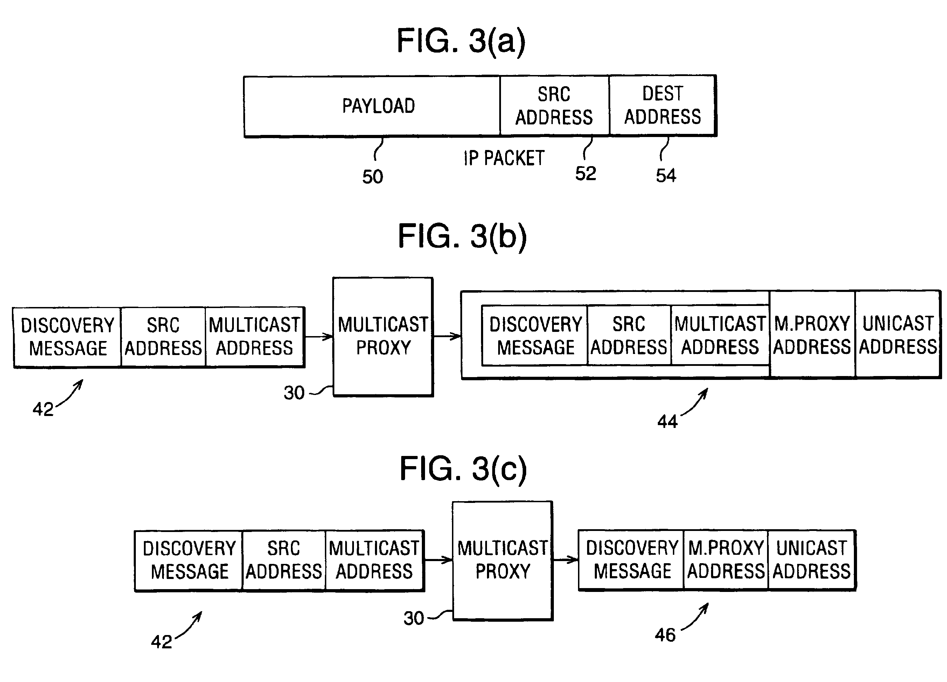

The proxy 30 can operate in two ways:
a) the proxy 30 encapsulates the packet in a unicast IP packet addressed to the gatekeeper 12 and sends it via the router 26. The format is shown in Fig.3(b), the packet from terminal 20 is referenced 42 and the packet after encapsulation is referenced 44. The technique is known as tunnelling.

When the gatekeeper 12 receives the packet, it responds to terminal 20 by sending a GatekeeperConfirm message including the address which terminal 20 can use to contact the gatekeeper 12, ie the gatekeeper processes the discovery packet according to conventional discovery protocol, and the protocol itself is executed normally. Terminal 20 can now use the gatekeeper services in the conventional way to set up a VoIP service with the terminal 36 or with the circuit telephone network 40 via the H.232 gateway 38.

In a variation, instead of addressing the encapsulated packet to the gatekeeper 12, the proxy means 30 may address the packet to an agent which is able to decapsulate the packet itself, the agent operating on behalf of the gatekeeper 12.
b) Alternatively, the multicast proxy 30 changes the destination address in the GatekeeperRequest message to the unicast address of the gatekeeper 12; this is shown in Fig.3(c) in which the readdressed packet is referenced 46. The procedure is then as described above.

Fig.3(a) illustrates a standard IP packet with payload 50, SRC address 52, and destination address 54.

The unicast address of the packet 44 or packet 46 may, in one example, be the first hop router (not shown) to which the addressed service related entity is attached.

It will be understood that each packet such as the packet 42 in Figs. 3(b) and (c) will be replicated by the multicast proxy means 30 a number of times equal to the number of service related entities which are to receive the packet during the discovery mode. This number is determined at initial set-up.

The behaviour of the multicast proxy means 30 can be controlled by a terminal (not shown) or by the provision of an optional policy repository 32 which can store user-specific policy information, and may contain a Home Location Register and/or a Visitor Location Register.

As an alternative to setting up a VoIP session the invention can also be used to set up any other IP-supported session such as a multimedia session.

## Claims

1. In a packet radio system comprising an Internet Protocol network (10) supporting a plurality of physical entities providing IP services (12,14,16,18) and having for each service automatic entity IP address discovery procedures, and a plurality of user terminals(20,36) each connected through an access network (22) to a service node (24) and a router (26), a method of discovering the IP address of one physical entity characterised by the steps of:
generating a multicast or broadcast discovery message as a first discovery packet (42);
replicating the first discovery packet;
and addressing each replicated packet (44) to a different physical entity.

2. A method according to claim 1 in which each replicated packet is encapsulated to provide a second discovery packet (44)

3. A method according to claim 1 in which each replicated packet is readdressed to provide a second discovery packet (46).

4. A method according to claim 3 in which the multicast or broadcast address of the first discovery packet is mapped to a set of configured unicast addresses.

5. A method according to any preceding claim in which, on receipt of a second discovery packet an addressed physical entity responds with a conventional protocol response.

6. A method according to any preceding claim in which the sourcing address of each second discovery packet is the address of a first hop router to which the required physical entity is attached.

7. A method according to any one of claims 1 to 5 in which the sourcing address of each second discovery packet is the address of an agent operating on behalf of a physical entity and having the ability to decapsulate a second discovery packet.

8. A packet radio system comprising an Internet Protocol (IP) network (10) supporting a plurality of physical entities providing IP services(12,14,16,18) and having for each service automatic entity IP address discovery procedures, and a plurality of user terminals (20,36) each connected through an access network (22) to a service node (24) and a router (26), characterised by a multicast proxy means(30) connected to a service node(24) and its router (26), the proxy means being arranged to receive a first discovery packet (42) from the service node and to provide a number of second discovery packets(44) each addressed to a different physical entity.

9. A packet radio system according to claim 8 further comprising a policy repository (32) arranged to store user-specific policy information.
